# EUROPÄISCHE PATENTSCHRIFT

(11) **EP 3 002 857 B1**
(45) Veröffentlichungstag und Bekanntmachung des Hinweises auf die Patenterteilung: **15.05.2019**
(21) Anmeldenummer: 15181804.4
(22) Anmeldetag: 20.08.2015
(51) Int. Cl.: H02K 16/00, H02K 7/108, H02K 7/00, H02K 7/08, H02K 11/23, F16D 7/02

(54) **REDUNDANTER MODULARER SCHWENKWINKELMOTOR**
REDUNDANT MODULAR TILT ANGLE MOTOR
MOTEUR D'ANGLE DE ROTATION MODULAIRE REDONDANT

(30) Priorität: 01.10.2014 DE 102014014588
(43) Veröffentlichungstag der Anmeldung: 06.04.2016
(73) Patentinhaber: Liebherr-Aerospace Lindenberg GmbH, 88161 Lindenberg/Allgäu (DE)
(72) Erfinder: Ried, Georg, 88175 Scheidegg (DE); Petretti, Albert, 88161 Lindenberg (DE); Kegel, Philipp, 88178 Heimenkirch (DE); Schilling, Christian, 88167 Maierhöfen (DE); Koros, Michael, 88161 Lindenberg (DE)
(74) Vertreter: Laufhütte, Dieter

(56) Entgegenhaltungen:
- CN-A- 101 834 504
- DE-A1- 19 545 513
- US-A1- 2006 113 933

## Beschreibung

Die vorliegende Erfindung betrifft einen redundanten modularen Schwenkwinkelmotor, der als eine Motoranordnung mit wenigstens drei Motoren ausgeführt ist.

Gattungsgemäße Schwenkwinkelmotoren mit entsprechenden Ausbrech-Kupplungen dienen zur Ansteuerung von hydraulischen Vorsteuerventilen und stellen somit das Herzstück sogenannter "Direct Drive" Ventile dar. Derartige Direct Drive Ventile steuern die Position eines oder mehrerer hydraulischer Steuerschieber direkt, d.h. ohne hydraulische Verstärkung, durch geregelten elektrischen Strom. Gemäß dem Stand der Technik ist dabei für derartige Anwendungen eine fixe, unveränderbare Anzahl von Motoren auf einer Achse vorgesehen und miteinander gekoppelt. Die konstruktive Auslegung des Gesamtmotors bzw. der ganzen Motoranordnung ist dabei getrieben und bestimmt vom gewählten Redundanzkonzept und für dieses bzw. für dessen genaue Anzahl an Motoren jeweils individuell konzipiert und optimiert. Es ist nicht ohne Weiteres möglich, ein gewähltes Redundanzkonzept hinsichtlich der Anzahl der Motoren zu variieren. Darüber hinaus gibt es bisher keine Lösungen für die individuelle Positionsmessung der Motorelemente bzw. der einzelnen Motoren, und somit keine Möglichkeit der elektronischen Überwachung der Freigängigkeit und kontrollierten Bewegung einzelner Motor-Stator-Paare.

Die US 2006 / 113 933 A1 offenbart eine Motoranordnung umfassend drei Motoren mit jeweils einem Rotor und einem Stator, wobei die Rotoren jeweils über eine elektromechanische Kupplung mit einer gemeinsamen zentralen Drehwelle gekuppelt sind. Dabei sind die Kupplungen, Rotoren und Statoren jeweils konzentrisch und radial versetzt zueinander um die Drehwelle angeordnet.

Aus der DE 195 45 513 A1 ist eine Ausbrechkupplung zur Verbindung eines Drehantriebs und eines Drehabtriebs mit gemeinsamer Drehachse bekannt, welche bei Überlast ein Ausbrechen des Drehantiebs zum Drehabtrieb erlaubt. Drehabtrieb und Drehantrieb der Kupplung sind durch ein vorgespanntes Federelement miteinander verbunden.

Die CN 101 834 504 A zeigt eine Motoranordnung mit Rotoren und Statoren umfassenden Motoren, welche an einer gemeinsamen Drehwelle angeordnet sind. Dabei sind die Rotoren einer Gruppe von Motoren fest mit der Drehwelle verbunden, während die Rotoren einer anderen Gruppe von Motoren mittels lösbarer Kupplungen mit der Drehwelle verbunden sind.

Aufgabe der vorliegenden Erfindung ist es daher, eine verbesserte Motoranordnung zur Ansteuerung von Vorsteuerventilen bereitzustellen, die flexibler hinsichtlich der Anzahl verwendeter Motoren variiert werden kann und bei der eine vereinfachte individuelle Positionsmessung der Motoren möglich ist.

Diese Aufgabe wird erfindungsgemäß durch eine Motoranordnung zur Ansteuerung von Vorsteuerventilen mit den Merkmalen des Anspruchs 1 gelöst, mit vier Motoren, mit je einem Stator und je einem Rotor, wobei die Motoren an einer gemeinsamen Drehwelle vorgesehen sind, wobei jeder Motor über je eine mechanische Kupplung mit der Drehwelle gekuppelt ist, wobei die gemeinsame Drehwelle als zentrales Bauteil der Motoranordnung mittig durch Durchführungen der Motoren und der Kupplungen geführt ist.

Hierdurch wird eine modulare, kaskadierbare Anordnung von Motoren bereitgestellt, bei denen es sich um identische Motoren handeln kann, die auf einer gemeinsamen Welle redundant anbringbar sind und dabei ohne weitergehende konstruktive Änderungen der Anordnung in unterschiedlichen Anzahlen bereitstellbar sind. Die Anzahl der Motoren ist dabei zunächst beliebig von drei aufwärts. Bevorzugt können aber Ausführungen mit dreifacher, vierfacher oder sechsfacher Redundanz der Motoren sein. Die redundanten Motorelemente, die aus je wenigstens einem Stator und wenigstens einem Rotor bestehen, können dabei hintereinander in Axialrichtung auf einer gemeinsamen Drehwelle angebracht sein.

Erfindungsgemäß umfasst jede Kupplung wenigstens ein mit dem Rotor des entsprechenden Motors gekoppeltes Kupplungsaußenteil, wenigstens ein mit der Drehwelle gekoppeltes Kupplungsinnenteil und wenigstens eine Bügelfederung, wobei die Bügelfeder, Kupplungsaußenteil und Kupplungsinnenteil in Normalbetrieb des entsprechenden Motors miteinander kuppelt und im Fehlerbetrieb voneinander entkuppelt.

Die Verbindung zwischen Rotor und Drehwelle ist somit nicht starr, sondern über die mechanische Kupplung realisiert. Dadurch kann im Falle eines Verklemmens von Stator und zugeordnetem Rotor, welches einem Fehlerbetrieb des entsprechenden Motors entspricht, die Drehwelle unter Aufbringung einer definierten Ausbrechkraft weiterbewegt werden. Mit dem Begriff Normalbetrieb des Motors ist dabei der Betrieb gemeint, bei welchem kein Verklemmen bzw. Klemmfall zwischen Stator und Rotor vorliegt. Somit können bei redundanter Anordnung von mindestens drei Motoren bzw. Motorelementen einzelne, klemmende Rotorsegmente durch die anderen, nicht klemmenden Motoren im Sinne einer Mehrheitsentscheidung überdrückt werden.

Erfindungsgemäß sind gleiche Kupplungen und gleiche Motoren vorgesehen, welche in axialer Richtung versetzt voneinander entlang der gemeinsamen Drehwelle angeordnet sind.

Dadurch ist eine kostengünstige Mehrfachnutzung gleicher Komponenten möglich, welche darüber hinaus in unterschiedlicher Anzahl und dabei ohne wesentliche konstruktive Änderungen der Gesamtanordnung verwendet werden können. Somit kann mit der gleichen Grundkonstruktion eine größere Bandbreite von Motoranordnungen mit unterschiedlichen Anzahlen an Motoren bereitgestellt werden.

Ferner sind erfindungsgemäß die Kupplungen jeweils neben den zugeordneten Motoren angeordnet, wobei zwei Kupplungen zwischen zwei der Motoren und zwei Kupplungen zwischen den anderen zwei Motoren angeordnet sind.

Erfindungsgemäß ist an jedem Motor wenigstens je ein elektrischer Positionssensor zur Erfassung des Auslenkungswinkels des entsprechenden Motors vorgesehen, wobei gleiche Positionssensoren innerhalb eines Gehäuses der Motoranordnung vorgesehen sind, wobei die Positionssensoren mit dem Kupplungsaußenteil über einen Verbindungsabschnitt gekoppelt sind, und wobei die Positionssensoren Differentialtransformatoren sind.

Mit Hilfe der Positionssensoren ist es möglich, den jeweiligen aktuellen Auslenkungswinkel des zugeordneten Motors bzw. Motorelements zu messen. Dieser Sensor kann sowohl zur genauen Regelung der Winkelposition als auch zur Überwachung der Bewegung des Motor bzw. des Motorelements dienen.

Das Integrieren der Positionssensoren in dem Gehäuse und das Verbinden der Sensoren mit den Kupplungsaußenteilen bedingt eine vorteilhaft geringere Masse der Anordnung mit entsprechend verringerter Trägheit der bewegten Teile des Motors. Das maximal benötigte Drehmoment kann so niedrig gehalten werden, wodurch auch die Motordimensionen klein gehalten werden können. Auch das Bereitstellen der Sensoren einer ansonsten notwendigen Entstörungsvorrichtung ist nicht notwendig, da im Falle der Störung bzw. des Verklemmens eines Sensors die Kupplung ein weiteres Bewegen der Drehwelle ermöglicht.

In einem bevorzugten Ausführungsbeispiel ist denkbar, dass der Rotor mit dem Kupplungsaußenteil insbesondere mittels Stiften und mittels wenigstens eines Rings gekoppelt ist. Hierdurch wird eine vorteilhaft einfache Kupplung der genannten Bauteile ermöglicht.

Motoren und Kupplungen können sich vorteilhafterweise im Wesentlichen parallel von der Drehwelle weg radial nach außen erstrecken. Die radiale Erstreckung der Gesamtanordnung wird hierbei vorteilhaft gering gehalten.

In einem weiteren bevorzugten Ausführungsbeispiel ist denkbar, dass zwischen wenigstens zwei Kupplungen Trennscheiben vorgesehen sind. Dadurch ist eine mechanische Trennung zwischen den Kupplungen hergestellt, welche ein vorteilhaft störungsarmes, getrenntes Funktionieren der Kupplungen ermöglicht.

In einem weiteren bevorzugten Ausführungsbeispiel ist denkbar, dass die Drehwelle über Duallager gelagert ist.

Im Falle eines Defekts einer Lagerfläche oder eines oder mehrerer Wälzkörper kann der zweite, unbeschädigte Teil des Duallagers weiterhin ein weiteres Bewegen der Drehwelle mit niedrigem Reibwiderstand gewährleisten.

Weitere Einzelheiten und Vorteile der Erfindung werden anhand der Figuren aufgezeigt. Dabei zeigen:
- Figur 1:: Querschnitt einer erfindungsgemäßen Motoranordnung;
- Figur 2:: Ansichten einer mechanischen Kupplung;
- Figur 3:: Detailansicht eines Positionssensors; und
- Figur 4:: Funktionales Blockbild einer erfindungsgemäßen Motoranordnung mit vierfacher Redundanz.

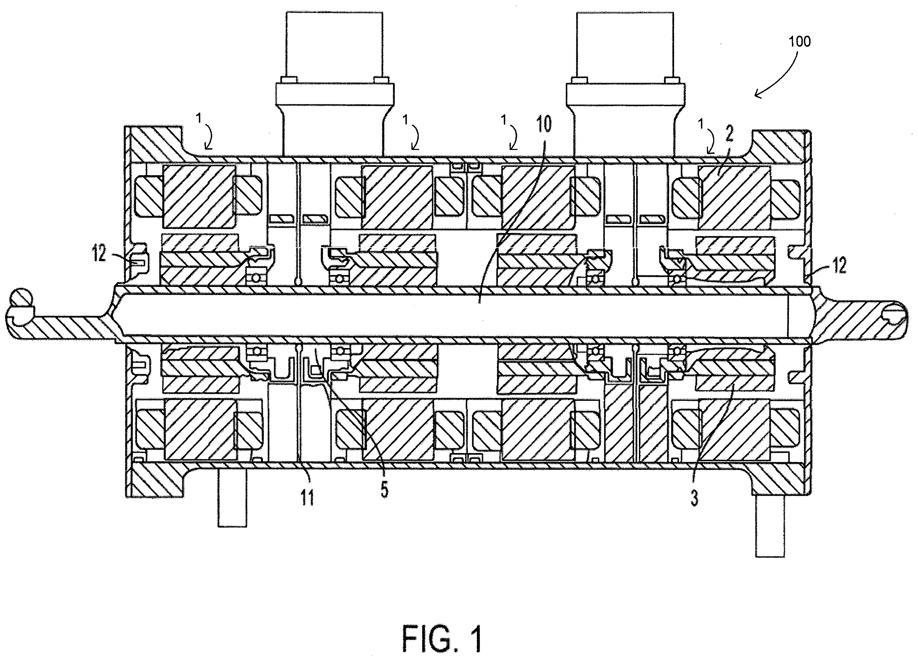

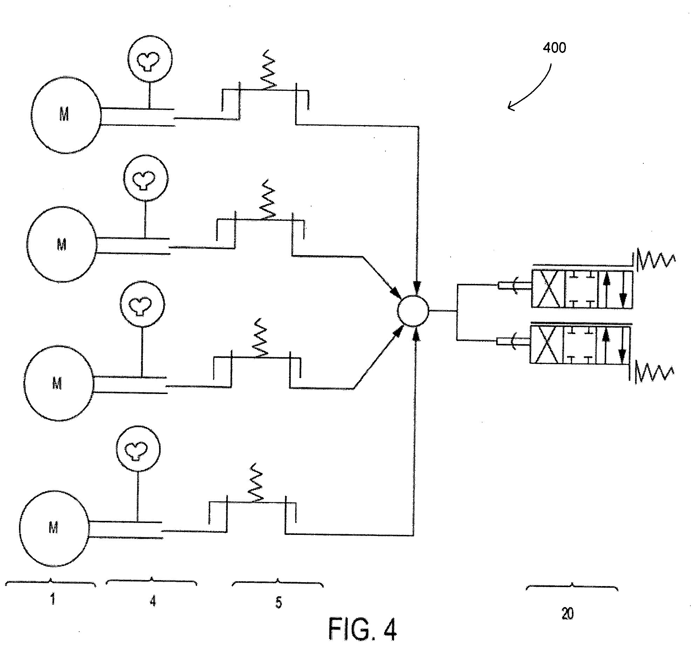

Figur 1 zeigt eine erfindungsgemäße Motoranordnung zur Ansteuerung von in Figur 4 gezeigten Vorsteuerventilen 20. Das vorliegende Ausführungsbeispiel umfasst vier Motoren 1 mit je einem Stator 2 und je einem Rotor 3. Die Motoren 1 sind an einer gemeinsamen Drehwelle 10 vorgesehen, wobei jeder Motor 1 über eine mechanische Kupplung 5 mit der Drehwelle 10 gekuppelt ist.

Motoren 1 und Kupplungen 5 können im Wesentlichen hohlzylinderförmig oder ringförmig ausgestaltete Bauteile sein. Dabei ist in deren Mitte je eine Durchführung für die Drehwelle 10 vorgesehen. Die Drehwelle 10 ist somit das zentrale Bauteil der Anordnung, um welches herum weitere Komponenten der Anordnung gruppiert sind.

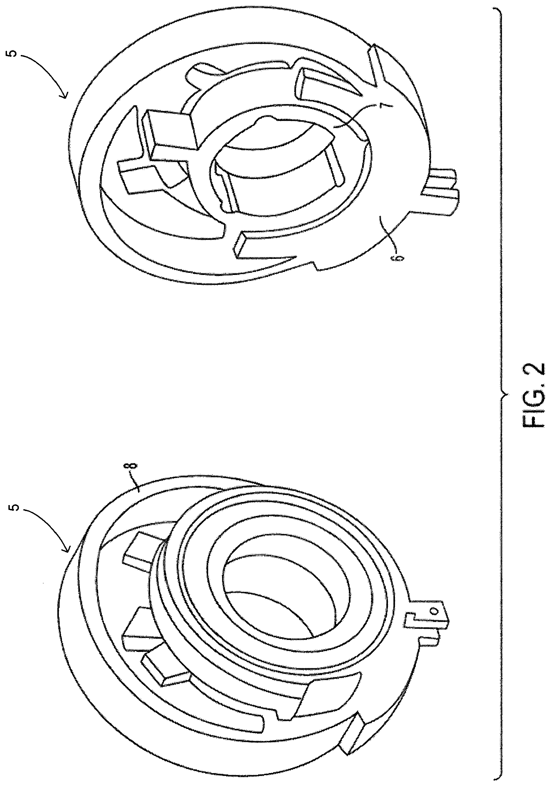

Zwischen den Kupplungen 5 können ferner Trennscheiben 11 vorgesehen sein, die eine mechanische Trennung der Kupplungen 5 bewirken. Die Trennscheiben 11 können dabei lochscheibenförmig bzw. hohlzylinderförmig ausgebildet sein. Im gezeigten Ausführungsbeispiel der Figur 2 sind insgesamt zwei Trennscheiben 11 vorgesehen. Es ist auch denkbar, die Trennscheiben nicht jeweils zwischen zwei Kupplungen 5 sondern jeweils zwischen einer Kupplung 5 und einem ihr nicht zugeordneten Motor 1 anzuordnen.

Jeder Stator 2 der Motoren 1 hat wenigstens eine Kontaktfläche, über die er beispielsweise über einen radial außen liegenden Bereich des Stators 2 mit dem Gehäuse der Motoranordnung in Kontakt ist. Hierdurch wird ein guter Wärmeaustausch zwischen den Komponenten ermöglicht, wodurch die Motortemperatur in einem gewünschten Bereich während des Betriebs gehalten werden kann. Wie Figur 1 zu entnehmen ist, ist die Drehwelle 10 an ihren axial außen gelegenen Lagerbereichen über insgesamt wenigstens zwei Duallager 12 am Gehäuse der Motoranordnung gelagert. Das Gehäuse der Motoranordnung kann dabei als ein Metallgehäuse ausgeführt sein. Die Duallager 12 können dabei wenigstens zwei konzentrisch angeordnete Wälzbereiche umfassen. Dadurch ist sichergestellt, dass bei einem Defekt in einem der Wälzbereiche der andere Wälzbereich ein reibungsarmes Weiterdrehen der Drehwelle 10 ermöglicht.

Figur 2 zeigt zwei perspektivische Ansichten der Kupplung 5. Hierbei ist zu erkennen, dass innerhalb des Kupplungsaußenteils 6 ein Kupplungsinnenteil 7 vorgesehen ist. Kupplungsaußenteil 6 und Kupplungsinnenteil 7 sind mittels Bügelfeder 8 miteinander lösbar verbunden. Das Kupplungsaußenteil 6 ist mit einem Motor 1 verbunden und das Kupplungsinnenteil 7 ist mit der Drehwelle 10 verbunden. Die Kupplungsinnenteile 7 der Kupplungen 5 können mittels paralleler Stifte mit der Drehwelle 10 gekoppelt sein. Hierfür können an den Kupplungsinnenteilen 7 und an der Drehwelle 10 entsprechende Nuten vorgesehen sein, wobei die Stifte zumindest teilweise in den Nuten lagerbar sind. Der Rotor 3 kann mit dem Kupplungsaußenteil 6 mittels eines Rings befestigt sein und ein Drehmoment durch einen parallelen Stift übertragen.

Jeder der Rotoren 3 ist über eine eigene Kupplung 5 mit der Drehwelle 10 verbunden. Im Falle einer Störung bzw. einer Blockierung zwischen einem Rotor 3 und seinem Stator 2 ermöglicht die Kupplung 5 eine weitere Bewegung bzw. Drehung der Drehwelle 10.

Sobald das Drehmoment, welches zwischen Kupplungsaußenteil 6 und Kupplungsinnenteil 7 übertragen wird, einen normalen Betriebswert übersteigt, gibt die Bügelfeder 8 nach und ermöglicht ein relatives Drehbewegen zwischen Kupplungsaußenteil 6 und Kupplungsinnenteil 7.

Die Bügelfeder 8 kann dabei als C-förmiges Bauteil ausgeformt sein, dass mittels seiner Endabschnitte ein lösbares Verbinden von Kupplungsaußenteil 6 und Kupplungsinnenteil 7 ermöglicht. Ein mittlerer Bogenabschnitt der Bügelfeder 8 kann dabei entsprechend seiner Elastizität eine Rückstellende und fixierende Kraft auf Kupplungsaußenteil 6 und Kupplungsinnenteil 7 ausüben, wodurch beide Bauteile in gewissen Grenzen miteinander gekuppelt werden.

Kupplungsaußenteil 6 und Kupplungsinnenteil 7 können als Bauteile ausgestaltet sein, die in wesentlichen Teilen wenigstens je eine Ringstruktur umfassen. Das Kupplungsaußenteil 6 kann ferner einen Gabelabschnitt umfassen, in welchem das Kupplungsinnenteil 7 zumindest teilweise lagerbar ist. Weiterhin sind an Kupplungsaußenteil 6 und Kupplungsinnenteil 7 Anschläge denkbar, mittels derer eine Relativbewegung zwischen Kupplungsaußenteil 6 und Kupplungsinnenteil 7 begrenzbar ist. Das Kupplungsaußenteil 6 umfasst des Weiteren einen Verbindungsabschnitt, über den das Kupplungsaußenteil 6 mit einem Positionssensor 4 koppelbar ist.

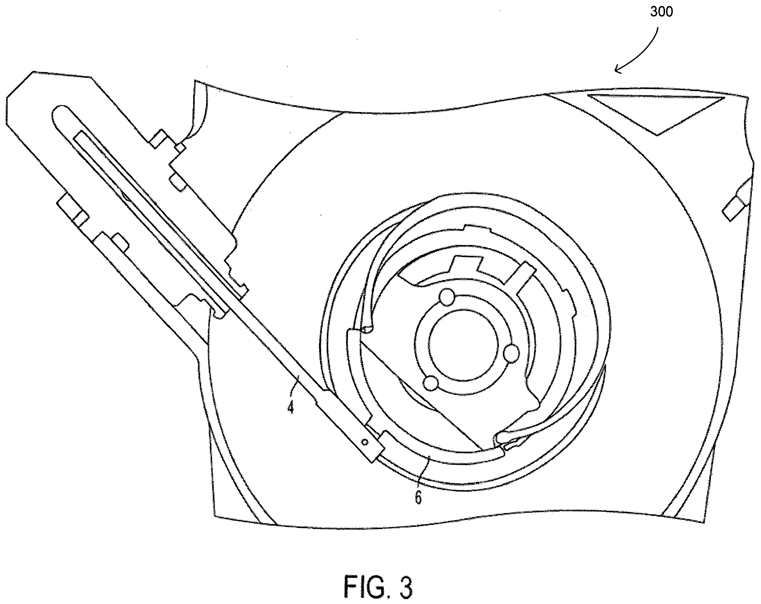

Figur 3 zeigt eine detaillierte Ansicht eines Positionssensors 4, welcher mit dem Kupplungsaußenteil 6 einer Kupplung 5 gekoppelt ist. Positionssensoren 4 sind dabei jeweils an jedem Kupplungsaußenteil 6 aller in der Anordnung vorgesehenen Kupplungen 5 vorgesehen.

Der Positionssensor 4 ist hierbei über den Verbindungsabschnitt mit dem Kupplungsaußenteil 6 gekoppelt. Wie zu erkennen ist, kann der Positionssensor 4 einen beschränkten Winkelbereich der Motorbewegung des Motors 1 erfassen. Es sind alternativ oder zusätzlich auch Ausführungsformen denkbar, bei denen auch ein vollständige Umdrehungen des Motors 1 erfassender Positionssensor 4 vorgesehen sein kann.

Figur 4 zeigt ein funktionelles Blockbild einer erfindungsgemäßen Motoranordnung mit vierfacher Redundanz, d.h. mit vier Motoren 1. Ein beispielhaft dargestelltes Vorsteuerventil 20 wird hierbei parallel von vier Motoren 1, welche über vier Kupplungen 5 mit dem Vorsteuerventil 20 gekoppelt sind, angesteuert. An jedem der Motoren 1 ist dabei wenigstens ein Positionssensor 4 vorgesehen. Kommt es zu einer Blockade eines der Motoren 1 und/oder der Positionssensoren 4, so können diese mittels der ihnen zugeordneten Kupplung 5 von dem Vorsteuerventil 20 entkoppelt werden. Das Vorsteuerventil 20 kann weiterhin mit den drei nicht entkoppelten Motoren 1 betrieben werden.

Bei dem gezeigten Vorsteuerventil 20 handelt es sich im Ausführungsbeispiel der Figur 4 um ein 4/3-Wegeventil. Die vorliegende Anmeldung ist jedoch nicht auf ein solches beschränkt. Vielmehr können alle denkbaren Wegeventile mit der erfindungsgemäßen Motoranordnung angesteuert werden.

## Patentansprüche

1. Motoranordnung zur Ansteuerung von Vorsteuerventilen (20), mit vier Motoren (1) mit je einem Stator (2) und je einem Rotor (3), wobei die Motoren (1) an einer gemeinsamen Drehwelle (10) vorgesehen sind, wobei jeder Motor (1) über je eine mechanische Kupplung (5) mit der Drehwelle (10) gekuppelt ist, wobei die gemeinsame Drehwelle (10) als zentrales Bauteil der Motoranordnung mittig durch Durchführungen der Motoren (1) und der Kupplungen (5) geführt ist, wobei jede Kupplung (5) wenigstens ein mit dem Rotor (3) des entsprechenden Motors (1) gekoppeltes Kupplungsaußenteil (6), wenigstens ein mit Drehwelle (10) gekoppeltes Kupplungsinnenteil (7) und wenigstens eine Bügelfeder (8) umfasst, und wobei die Bügelfeder (8) Kupplungsaußenteil (6) und Kupplungsinnenteil (7) im Normalbetrieb des entsprechenden Motors (1) miteinander kuppelt und im Fehlerbetrieb voneinander entkuppelt,
**dadurch gekennzeichnet,**
**dass** gleiche Kupplungen (5) und gleiche Motoren (1) vorgesehen sind, welche in axialer Richtung versetzt voneinander entlang der gemeinsamen Drehwelle (10) angeordnet sind, wobei die Kupplungen (5) jeweils neben den zugeordneten Motoren (1) angeordnet sind, und wobei zwei Kupplungen (5) zwischen zwei der Motoren (1) und zwei Kupplungen (5) zwischen den anderen zwei Motoren (1) angeordnet sind, und dass an jedem Motor (1) wenigstens je ein elektrischer Positionssensor (4) zur Erfassung des Auslenkungswinkels des entsprechenden Motors (1) vorgesehen ist, wobei gleiche Positionssensoren (4) innerhalb eines Gehäuses der Motoranordnung vorgesehen sind, wobei die Positionssensoren (4) mit dem Kupplungsaußenteil (6) über einen Verbindungsabschnitt gekoppelt sind, und wobei die Positionssensoren (4) Differentialtransformatoren sind.

2. Motoranordnung nach Anspruch 1, **dadurch gekennzeichnet, dass** der Rotor (3) mit dem Kupplungsaußenteil (6) mittels Stiften und mittels wenigstens eines Rings gekoppelt ist.

3. Motoranordnung nach einem der vorhergehenden Ansprüche, **dadurch gekennzeichnet, dass** zwischen wenigstens zwei Kupplungen (5) Trennscheiben (11) vorgesehen sind.

4. Motoranordnung nach einem der vorhergehenden Ansprüche, **dadurch gekennzeichnet, dass** die Drehwelle (10) über Duallager (12) gelagert ist.

## Claims

1. A motor arrangement for controlling pilot valves (20), having four motors (1), each having at least one stator (2) and at least one rotor (3), wherein the motors (1) are provided at a common rotating shaft (10), with each motor (1) being coupled to the rotating shaft (10) via at least one respective mechanical clutch (5), wherein the common rotating shaft (10), as a central component of the motor arrangement, is guided centrally through passages of the motors (1) and clutches (5), wherein each clutch (5) comprises at least one outer clutch part (6) coupled to the rotor (3), at least one inner clutch part (7) coupled to the rotating shaft (10), and at least one yoke spring (8), with the yoke spring (8) coupling the outer clutch part (6) and the inner clutch part (7) to one another in normal operation of the corresponding motor (1) and decoupling them from one another in improper operation,
**characterized in that**
like clutches (5) and like motors (1) are provided, which are arranged along the common rotating shaft offset to one another in the axial direction, wherein the clutches (5) are respectively arranged next to the associated motors (1), and wherein two clutches (5) are arranged between two of the motors (1) and two clutches (5) are arranged between the other two motors (1), and **in that** at least one electrical position sensor (4) for the detection of the deflection angle of the corresponding motor (1) is provided on each motor (1), wherein like position sensors (4) are provided inside one housing of the motor arrangement, wherein the position sensors (4) are coupled with the clutch outer part (6) via a connection portion, and wherein the position sensors (4) are differential transformers.

2. A motor arrangement in accordance with claim 1, **characterized in that** the rotor (3) is coupled to the outer clutch part (6) by means of pins and by means of at least one ring.

3. A motor arrangement in accordance with any one of the preceding claims, **characterized in that** separating disks (11) are provided between at least two clutches (5).

4. A motor arrangement in accordance with any one of the preceding claims, **characterized in that** the rotating shaft (10) is supported via dual bearings (12).

## Revendications

1. Agencement de moteur destiné à la commande de vannes pilote (20), comprenant quatre moteurs (1) avec respectivement un stator (2) et respectivement un rotor (3), les moteurs étant prévus à un arbre de rotation (10) commun, chaque moteur (1) étant couplé avec l'arbre de rotation (10) par le biais de respectivement un embrayage (5) mécanique, l'arbre de rotation (10) commun, comme composant central de l'agencement de moteur, étant guidé de manière centrée à travers des passages des moteurs (1) et des passages des embrayages (5), dans lequel chaque embrayage (5) comprend au moins une partie extérieur d'embrayage (6) couplée au rotor (3) du moteur (1) respective, au moins une partie intérieure de l'embrayage (7) couplée à l'arbre de rotation (10) et au moins un ressort étrier (8) et dans lequel le ressort étrier (8) accouple la partie extérieure d'embrayage (6) et la partie intérieure d'embrayage (7) lors du fonctionnement normal du moteur (1) respective et les découple en fonctionnement en mode d'erreur,
**caractérisé en ce que**
des mêmes embrayages (5) et mêmes moteurs (1) sont prévus, qui sont disposés de manière décalés en direction axiale les uns par rapport aux autres le long de l'arbre de rotation (10) commun, dans lequel les embrayages (5) sont chacun disposés à côté des moteurs (1) associés, et dans lequel deux embrayages (5) sont disposés entre deux des moteurs (1) et deux embrayages (5) entre les autres des deux moteurs (1), et **en ce que** à chaque moteur (1) est prévue respectivement au moins un capteur de position (4) électrique pour la détection de l'angle de déflexion du moteur (1) respective, dans lequel des mêmes capteurs de position (4) sont prévues au sein d'un boîtier de l'agencement de moteur, les capteurs de position (4) étant couplés par le biais d'une partie de liaison avec la partie extérieure d'embrayage (6), et les capteurs de position (4) étant des transformateurs différentiels.

2. Agencement de moteur selon la revendication 1, **caractérisé en ce que** le rotor (3) est couplé avec la partie extérieure d'embrayage (6) au moyen de goupilles et au moyen d'au moins un anneau.

3. Agencement de moteur selon l'une quelconque des revendications précédentes, **caractérisé en ce que** des disques de séparations (11) sont prévues entre au moins deux embrayages (5).

4. Agencement de moteur selon l'une quelconques des revendications précédentes, **caractérisé en ce que** l'arbre de rotation (10) est monté par l'intermédiaire d'un palier double (12).
